# EUROPÄISCHE PATENTSCHRIFT

(11) **EP 0 793 776 B1**
(45) Veröffentlichungstag und Bekanntmachung des Hinweises auf die Patenterteilung: **05.12.2001**
(21) Anmeldenummer: 96909053.9
(22) Anmeldetag: 17.04.1996
(51) Int. Cl.: F02M 45/02, F01N 3/20, F02D 41/40

(54) **VERFAHREN UND VORRICHTUNG ZUR STEUERUNG EINER BRENNKRAFTMASCHINE**
METHOD AND DEVICE FOR CONTROLLING AN INTERNAL-COMBUSTION ENGINE
PROCEDE ET DISPOSITIF DE COMMANDE D'UN MOTEUR A COMBUSTION INTERNE

(30) Priorität: 22.09.1995 DE 19535162
(43) Veröffentlichungstag der Anmeldung: 10.09.1997
(73) Patentinhaber: ROBERT BOSCH GMBH, 70442 Stuttgart (DE)
(72) Erfinder: KRAMPE, Wolfgang, D-71272 Renningen (DE); HAFNER, Arno, A-2721 Hinterbrühl (AT)
(86) Internationale Anmeldenummer: DE9600660
(87) Internationale Veröffentlichungsnummer: WO9711269

(56) Entgegenhaltungen:
- EP-A- 0 621 400
- US-A- 3 626 910
- PATENT ABSTRACTS OF JAPAN vol. 18, no. 408 (M-1647), 29.Juli 1994 & JP,A,06 117225 (TOYOTA)
- PATENT ABSTRACTS OF JAPAN vol. 17, no. 558 (M-1493), 7.Oktober 1993 & JP,A,05 156993 (HINO MOTORS)
- PATENT ABSTRACTS OF JAPAN vol. 16, no. 585 (M-1347), 25.Dezember 1992 & JP,A,04 231645 (TOYOTA), 20.August 1992,

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Ein solches Verfahren und eine solche Vorrichtung zur Steuerung einer Brennkraftmaschine ist beispielsweise aus der EP-A-0 621 400 bekannt. Diese Schrift zeigt eine Vorrichtung zur Steuerung einer Brennkraftmaschine, bei dem erste Mittel der Brennkraftmaschine Kraftstoff zumessen, der in der Brennkraftmaschine verbrannt wird, wobei zweite Mittel eine Abgasnachbehandlung durchführen. Bei diesen zweiten Mitteln handelt es sich um einen NOX-Katalysator. Nach der eigentlichen Kraftstoffzumessung erfolgt eine Nacheinspritzung, wobei dieser Kraftstoff, der bei der Nacheinspritzung zugemessen wird, im NOX-Katalysator reagiert. Bei dieser Einrichtung erfolgt die zweite Einspritzung frühestens im Bereich der Endphase der Verbrennung nach dem Zünd-OT. Bevorzugt ist ein Bereich, der zwischen 80° nach Zünd-OT und dem UT liegt.

Ferner sind aus JP-A-06 117 225 (Patent Abstract of Japan, vol. 18, No. 408) und dem Patent Abstract of Japan, vol. 16, No. 585 Verfahren zur Steuerung einer Brennkraftmaschine bekannt, bei denen erste Mittel der Brennkraftmaschine Kraftstoff zumessen, der in der Brennkraftmaschine verbrannt wird, wobei zweite Mittel eine Abgasnachbehandlung durchführen. Bei diesen zweiten Mitteln handelt es sich um einen NOX-Katalysator. Nach der eigentlichen Kraftstoffzumessung erfolgt eine Nacheinspritzung, wobei dieser Kraftstoff, der bei der Nacheinspritzung zugemessen wird, im NOX-Katalysator reagiert.

Ferner ist bekannt, daß bei Dieselbrennkraftmaschinen in die Abgasleitung mittels einer Dosierpumpe Kohlenwasserstoffe zugemessen werden. In einem Reduktionskatalysator werden diese Kohlenwasserstoffe und die sich im Abgas befindlichen Stickoxide zu Kohlendioxid, Stickstoff und Wasser umgesetzt.

Um diese Reduktion von Stickoxiden ermöglichen zu können, muß zusätzlich eine Dosiervorrichtung vorgesehen sein.

### Aufgabe der Erfindung

Der Erfindung liegt die Aufgabe zugrunde, bei einem Verfahren und einer Vorrichtung zur Steuerung einer Brennkraftmaschine der eingangs genannten Art, das Abgasverhalten zu verbessern, wobei der Aufwand und die Kosten möglichst gering gehalten werden sollen.

### Vorteile der Erfindung

Mit der erfindungsgemäßen Vorgehensweise kann das Abgasverhalten der Brennkraftmaschine kostengünstig verbessert werden.

Vorteilhafte und zweckmäßige Ausgestaltungen und Weiterbildungen der Erfindung sind in den Unteransprüchen gekennzeichnet.

### Zeichnung

Die Erfindung wird nachstehend anhand der in der Zeichnung dargestellten Ausführungsformen erläutert. In Figur 1 ist grob schematisch das erfindungsgemäße Kraftstoffzumeßsystem dargestellt. In Figur 2 ist eine Endstufe zur Ansteuerung verschiedener Verbraucher der erfindungsgemäßen Vorrichtung aufgezeigt. In Figur 3, Figur 4 und in Figur 5 sind die Zumeßzyklen verschiedene Typen von Brennkraftmaschinen über dem Kurbelwellenwinkel aufgetragen.

### Beschreibung der Ausführungsbeispiele

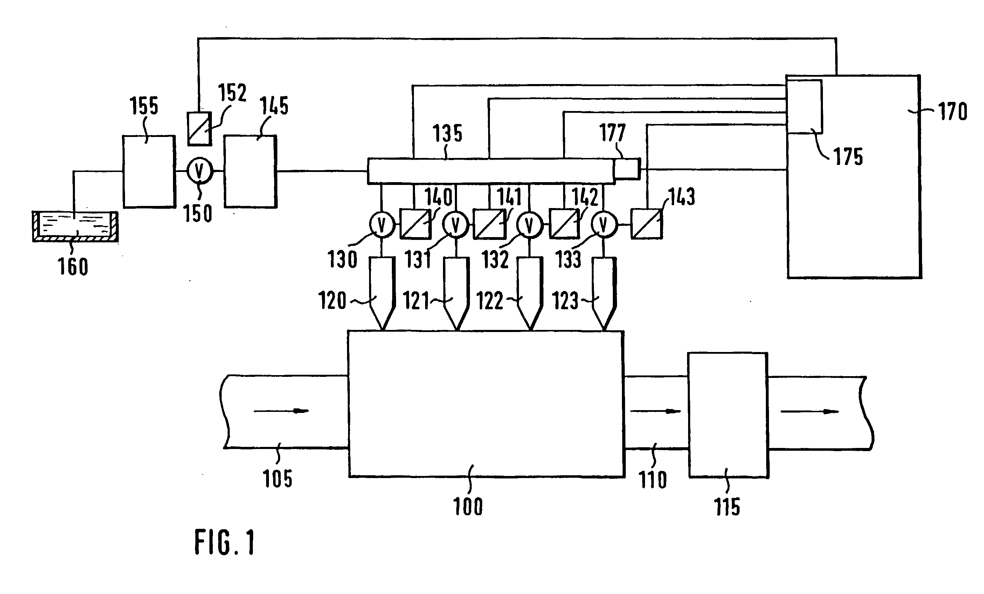

Im folgenden wird die erfindungsgemäße Vorrichtung am Beispiel einer selbstzündenden Brennkraftmaschine dargestellt, bei der die Kraftstoffzumessung mittels eines Magnetventils gesteuert wird. Die in Figur 1 dargestellte Ausführungsform betrifft ein sogenanntes Common-Rail-System. Die erfindungsgemäße Vorgehensweise ist aber nicht auf diese Systeme beschränkt. Sie kann bei allen Systemen eingesetzt werden, bei denen eine entsprechende Kraftstoffzumessung möglich ist. Dies ist bei magnetventilgesteuerten Kraftstoffzumeßsystemen der Fall.

Mit 100 ist eine Brennkraftmaschine bezeichnet, die über einen Ansaugleitung 105 Frischluft zugeführt bekommt und über eine Abgasleitung 110 Abgase abgibt. In der Abgasleitung 110 ist ein Reduktionskatalysator 115 angeordnet.

Bei der dargestellten Brennkraftmaschine handelt es sich um eine Vierzylinderbrennkraftmaschine. Jedem Zylinder der Brennkraftmaschine ist ein Injektor 120, 121, 122 und 123 zugeordnet. Den Injektoren wird über Magnetventile 130, 131, 132 und 133 Kraftstoff zugemessen. Der Kraftstoff gelangt von einem sogenannten Rail 135 über die Injektoren 120, 121, 122 und 123 in die Zylinder der Brennkraftmaschine 100.

Der Kraftstoff in dem Rail 135 wird von einer Hochdruckpumpe 145 auf einen einstellbaren Druck gebracht. Die Hochdruckpumpe 145 ist über ein Magnetventil 150 mit einer Kraftstofförderpumpe 155 verbunden. Die Kraftstofförderpumpe steht mit einem Kraftstoffvorratsbehälter 160 in Verbindung.

Das Ventil 150 umfaßt eine Spule 152. Die Magnetventile 130, 131, 132 und 133 enthalten Spulen 140, 141, 142 und 143, die jeweils mittels einer Endstufe 175 mit Strom beaufschlagt werden können. Die Endstufen 175 sind vorzugsweise in einem Steuergerät 170 angeordnet, das die Spule 152 entsprechend ansteuert.

Desweiteren ist ein Sensor 177 vorgesehen, der den Druck im Rail 135 erfaßt und ein entsprechendes Signal an das Steuergerät 170 leitet.

Dies Einrichtung arbeitet nun wie folgt. Die Kraftstofförderpumpe 155 fördert den Kraftstoff aus dem Vorratsbehälter über das Ventil 150 zur Hochdruckpumpe 145. Die Hochdruckpumpe 145 baut in dem Rail 135 einen vorgebbarren Druck auf. Üblicherweise werden Druckwerte größer als 800 bar im Rail 135 erzielt.

Durch Bestromen der Spulen 140 bis 143 werden die entsprechenden Magnetventile 130 bis 133 angesteuert. Die Ansteuersignale für die Spulen legen dabei den Einspritzbeginn und das Einspritzende des Kraftstoffs durch die Injektoren 120 bis 123 fest.

Der zugemessene Kraftstoff verbrennt in der Brennkraftmaschine 100, dabei entsteht Abgas, das als unerwünschtes Bestandteil Stickoxide umfaßt. Diese Stickoxide werden in dem Katalysator 115 mit Hilfe von Kohlenwasserstoffen reduziert. Erfindungsgemäß ist vorgesehen, daß mittels der Injektoren 120 bis 123 zusätzlich Kraftstoff nach der Verbrennung zugemessen wird. Diese Kraftstoffmenge wird mit dem Abgas ausgestoßen und reagiert im Katalysator 115 zusammen mit dem Stickoxid zu unschädlichen Bestandteilen. Die zusätzliche Einspritzung von Kraftstoff nach der eigentlichen Einspritzung wird als Nacheinspritzung bezeichnet. Die Nacheinspritzung erfolgt vorzugsweise im Bereich des unteren Totpunktes des jeweiligen Zylinders.

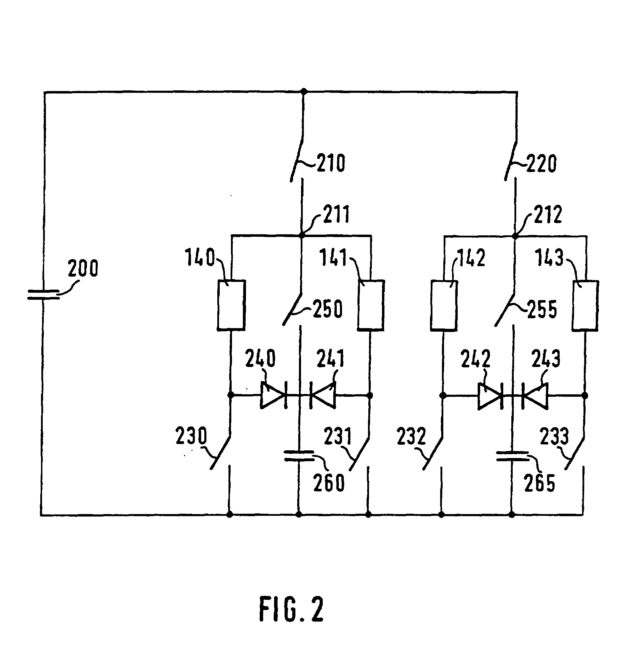

In Figur 2 ist eine mögliche Realisierung der Endstufe 175 dargestellt. Mit 200 ist eine Spannungsquelle bezeichnet. Ein erster Anschluß der Spannungsquelle, in der dargestellten Ausführungsform der positive Anschluß, steht über ein Schaltmittel 210 mit einem Verbindungspunkt 211 in Verbindung. An diesen Verbindungspunkt 211 ist der erste Anschluß der Spule 140 und der erste Anschluß der Spule 141 angeschlossen. Der zweite Anschluß der Spule 140 steht über ein Schaltmittel 230 mit dem zweiten Anschluß der Spannungsquelle 200 in Verbindung. Entsprechend steht der zweite Anschluß der Spule 141 über ein Schaltmittel 231 mit der Spannungsquelle 200 in Verbindung.

Die Verbindungsleitung zwischen der Spule 140 und dem Schaltmittel 230 steht über eine Diode 240 und ein Schaltmittel 250 mit dem Punkt 211 in Kontakt. Entsprechend steht der zweite Anschluß über eine Diode 241 und das Schaltmittel 250 mit dem Punkt 211 in Kontakt. Der gemeinsame Anschluß der Kathoden der Dioden 240 und 241 steht zum einen mit dem Schaltmittel 250 und zum anderen über einen Kondensator 260 mit der Spannungsquelle 200 in Verbindung.

Der erster Anschluß der Spannungsquelle steht ferner über ein Schaltmittel 220 mit einem Verbindungspunkt 212 in Verbindung. An diesen Verbindungspunkt 212 ist der erste Anschluß der Spule 142 und der erste Anschluß der Spule 143 angeschlossen. Der zweite Anschluß der Spule 142 steht über ein Schaltmittel 232 mit dem zweiten Anschluß der Spannungsquelle 200 in Verbindung. Entsprechend steht der zweite Anschluß der Spule 143 über ein Schaltmittel 233 mit der Spannungsquelle 200 in Verbindung.

Die Verbindungsleitung zwischen der Spule 142 und dem Schaltmittel 232 steht über eine Diode 242 und ein Schaltmittel 255 mit dem Punkt 212 in Kontakt. Entsprechend steht der zweite Anschluß über eine Diode 243 und das Schaltmittel 255 mit dem Punkt 212 in Kontakt. Der gemeinsame Anschluß der Kathoden der Dioden 242 und 243 steht zum einen mit dem Schaltmittel 255 und zum anderen über einen Kondensator 265 mit der Spannungsquelle 200 in Verbindung.

Die Schaltmittel 210 und 220 werden üblicherweise als High-Side-Schalter und die Schaltmittel 230, 231, 232 und 233 als Low-Side-Schalter bezeichnet. Die Schaltmittel 250 und 255 werden als Nachladeschalter und die Kondensatoren 260 und 265 als Hochsetzkondensatoren bezeichnet.

Die Schaltmittel sind vorzugsweise als Transistoren, insbesondere als Feldeffekttransistoren, realisiert. Die Schaltmittel können von dem Steuergerät 170 mit entsprechenden Ansteuersignalen angesteuert werden.

Diese Anordnung arbeitet nun wie folgt. Durch Ansteuern der Low-Side-Schalter kann der Stromfluß durch die jeweils zugeordnete Spule freigegeben werden. Mittels der High-Side-Schalter kann der durch die Spule fließende Strom auf vorgebbare Sollwerte geregelt werden.

Beim Öffnen der Low-Side-Schalter wird in den Spulen eine hohe Spannung induziert, und die dabei freiwerdende Energie wird in die Kondensatoren 260 und 265 umgeladen. Um ein schnelles Ansprechen der Magnetventile erreichen zu. können, werden zu Beginn der Ansteuerung die Schaltmittel 250 und 255 angesteuert und somit werden die Spulen mit einer hohen Spannung, die an den Kondensatoren 260 und 265 anliegt, beaufschlagt.

Die Kondensatoren 260 und 265 besitzen eine sehr große Kapazität und erfordern daher einen sehr großen Bauraum im Steuergerät 170. Um Kosten und Bauraum einsparen zu können, ist angestrebt, daß möglichst wenig Kondensatoren vorhanden sind. Hierzu wird angestrebt, daß jeweils eine große Anzahl von Spulen über einen gemeinsamen High-Side-Schalter angesteuert werden und entsprechend jeweils nur ein Kondensator vorzusehen ist.

Eine Gruppe von Verbrauchern, die über einen gemeinsamen High-Side-Schalter anzusteuern sind bzw. die ihnen zugeordneten Zylinder werden als Bank bezeichnet. Bedingt durch die Art der Ansteuerung der Spulen, insbesondere aufgrund der Spannungshochsetzung mittels der Kondensatoren, können zwei Spulen nicht gleichzeitig angesteuert werden. Das bedeutet, es ist jeweils nur eine Einspritzung in einen Zylinder einer Bank möglich.

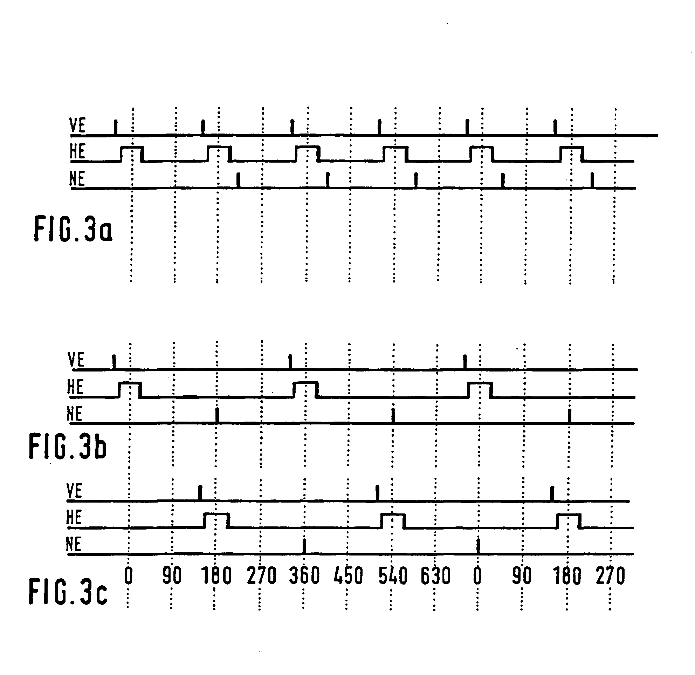

In Figur 3 sind die Verhältnisse bei einer Brennkraftmaschine mit vier Zylindern dargestellt. Über die Winkelstellung der Kurbelwelle sind die Einspritzungen in die einzelnen Zylinder aufgetragen. In Figur 3a sind in der ersten Zeile die Voreinspritzung VE, in der zweiten Zeile die Haupteinspritzung HE und in der dritten Zeile die Nacheinspritzung NE aufgetragen.

Die Haupteinspritzung HE in den ersten Zylinder erfolgt im Bereich des oberen Totpunktes des ersten Zylinders. Der obere Totpunkt liegt bei 0 Grad Kurbelwellenwinkel. Die Haupteinspritzung HE beginnt ca. 20 Grad vor dem oberen Totpunkt und besitzt eine Dauer von ca. 40 Grad. Die Voreinspritzung VE liegt kurz vor der Haupteinspritzung HE bei ca. minus 50 Grad vor dem oberen Totpunkt. In der Regel erstreckt sich die Voreinspritzung über einige Grad.

Die Zumessung in den zweiten Zylinder erfolgt im oberen Totpunkt des zweiten Zylinders, das heißt 180 Grad nach dem oberen Totpunkt des ersten Zylinders. Die Voreinspritzung VE des zweiten Zylinders liegt wiederum 40 bis 50 Grad vor dem oberen Totpunkt des zweiten Zylinders, das heißt zwischen 130 und 140 Grad nach dem oberen Totpunkt des ersten Zylinders.

Entsprechend liegen die Zumessungen in die weiteren Zylinder bei 360 und 540 Grad nach dem oberen Totpunkt des ersten Zylinders.

Erfindungsgemäß ist vorgesehen, daß die Nacheinspritzung NE im Bereich zwischen 100 und 270 Grad nach dem oberen Totpunkt des entsprechendes Zylinders erfolgen sollte, um eine gute Wirkung des Katalysators erzielen zu können. Ein bevorzugter Wert für die Nacheinspritzung liegt bei 150 Grad nach dem oberen Totpunkt. Wie das Schema der Figur 3a zeigt, liegt bei dem Wert 150 Grad nach dem oberen Totpunkt des ersten Zylinders die Zumessung für den zweiten Zylinder. Da mit einer Endstufe zwei gleichzeitige Einspritzungen in unterschiedliche Zylinder nicht realisierbar sind, ist dieser Winkelwert für die Nacheinspritzung mit der entsprechenden Endstufe nicht realisierbar. Erfindungsgemäß wird die Nacheinspritzung in einen Winkelbereich zwischen 200 und 240 nach dem oberen Totpunkt der entsprechenden Einspritzung gelegt. Dies bedeutet die Nacheinspritzung erfolgt nach der Haupteinspritzung des folgenden Zylinders.

In Figur 3b und 3c sind die Verhältnisse bei einer Vierzylinderbrennkraftmaschine dargestellt, bei denen zwei Bänke vorgesehen sind. Die Zumeßintervalle der ersten Bank sind in Figur 3b und die Zumeßintervalle der zweiten Bank sind in Figur 3c dargestellt. Der erste und der dritte Zylinder in der Zündreihenfolge sind der ersten Bank und der zweite und vierte Zylinder sind der zweiten Bank zugeordnet. Die Voreinspritzung VE und die Haupteinspritzung HE der einzelnen Zylinder erfolgen bei den entsprechenden Winkelstellungen wie in Figur 3a dargestellt.

Die Zumeßbereiche, das heißt der Einspritzbeginn, das Einspritzende und damit die Einspritzdauer der einzelnen Zumessungen der Vor- und Haupteinspritzungen werden abhängig von verschiedenen Betriebsparametern gesteuert und variieren in einem gewissen Bereich abhängig von diesen Betriebsbedingungen.

Wie in Figur 3b dargestellt, kann die Nacheinspritzung zum bevorzugten Zeitpunkt das heißt bei 150 Grad Kurbelwelle nach dem oberen Totpunkt des entsprechenden Zylinders gewählt werden. Dies ist möglich, da die Zumessung in den zweiten Zylinder, die zu diesem Zeitpunkt erfolgt, durch die zweite Bank gesteuert wird.

Diese Vorgehensweise bietet den Vorteil, daß der Bereich, in dem die Nacheinspritzung erfolgen kann, im Bereich zwischen 100 und 270 Grad nach dem oberen Totpunkt des jeweiligen Zylinders beliebig einstellbar ist. Nachteilig an dieser Anordnung ist, daß die Zylinder bzw. die Magnetventile in zwei Bänke aufgeteilt werden müssen und damit zwei Endstufen erforderlich sind.

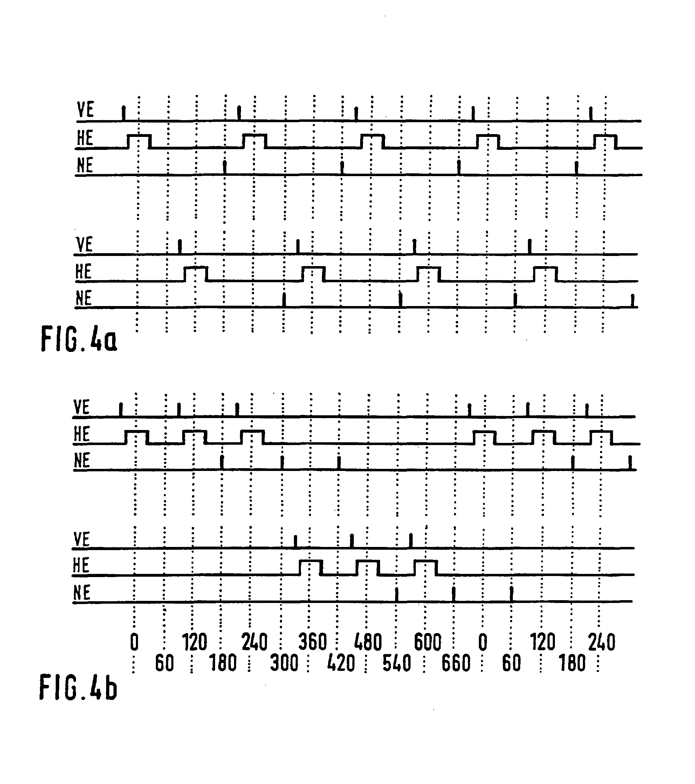

In Figur 4 sind die Verhältnisse am Beispiel einer Brennkraftmaschine mit 6 Zylinder dargestellt. Bei der Ausführungsform gemäß Figur 4a ist der erste, der dritte und der fünfte Zylinder in der Zündreihenfolge der ersten Bank und der zweite, der vierte und der sechste Zylinder der zweiten Bank zugeordnet. Die Abstände zwischen den einzelnen Einspritzungen beträgt ca. 120 Grad Kurbelwellenwinkel.

Die Voreinspritzungen liegen im Bereich zwischen 40 und 50 Grad vor dem oberen Totpunkt des jeweiligen Zylinders. Wie in Figur 4a dargestellt, liegt die Voreinspritzung in dem zweiten Zylinder der gleichen Bank zwischen 190 und 200 Grad nach dem oberen Totpunkt des ersten Zylinders.

Eine gewünschte Nacheinspritzung bei ca. 150 Grad Kurbelwelle nach dem oberen Totpunkt des ersten Zylinders ist nicht in allen Betriebsbedingungen realisierbar, da bei dieser Winkelstellung bereits die Zumessung in den zweiten Zylinder beginnen kann. Berücksichtigt man eine notwendige Pausenzeit zum Laden den Kondensators und zum Übertragen neuer Werte ist eine Nacheinspritzung lediglich zwischen bis 150 Grad Kurbelwelle nach dem oberen Totpunkt des entsprechenden Zylinders möglich.

In Figur 4b ist eine erfindungsgemäße Ausgestaltung dargestellt, bei dem der erste, der zweite und der dritte Zylin-der einer ersten Bank und der fünfte und sechste Zylinder der zweiten Bank zugeordnet ist. Bei vier von sechs Zylindern ist ein Nacheinspritzung im Bereich zwischen 160 und 360 nach dem oberen Totpunkt möglich. Bei zwei von sechs Zylindern ist eine Nacheinspritzung zwischen 100 und 360 nach dem oberen Totpunkt möglich.

Erfindungsgemäß wurde erkannt, daß nicht bei jeder Einspritzung eine Nacheinspritzungen erfolgen muß. Es ist ausreichend, wenn nur hin und wieder eine Nacheinspritzung erfolgt. So kann vorgesehen sein, daß nur bei jeder n-ten Zumessung eine Nacheinspritzung erfolgt. Die Zahl n kann dabei abhängig vom jeweiligen Betriebszustand und/oder der erforderlichen Menge der Nacheinspritzung vorgegeben werden.

Wie der Figur 4b zu entnehmen ist, ist die Nacheinspritzung, die dem ersten Zylinder zugeordnet ist, nur in einem kleinen Winkelbereich um 180 Grad nach dem oberen Totpunkt des ersten Zylinders möglich. Die Nacheinspritzung die dem zweiten oder dritten Zylinder zugeordnet ist, ist in einem sehr großen Winkelbereich zwischen 300 und 660 Grad nach dem oberen Totpunkt des ersten Zylinders möglich. Durch die erfindungsgemäße Zuordnung der einzelnen Zylinder zu den einzelnen Bänken bzw. Endstufen kann die Nacheinspritzung des dritten Zylinders bzw. des sechsten Zylinders in der Zündreihenfolge in einem weiten Winkelbereich variiert werden.

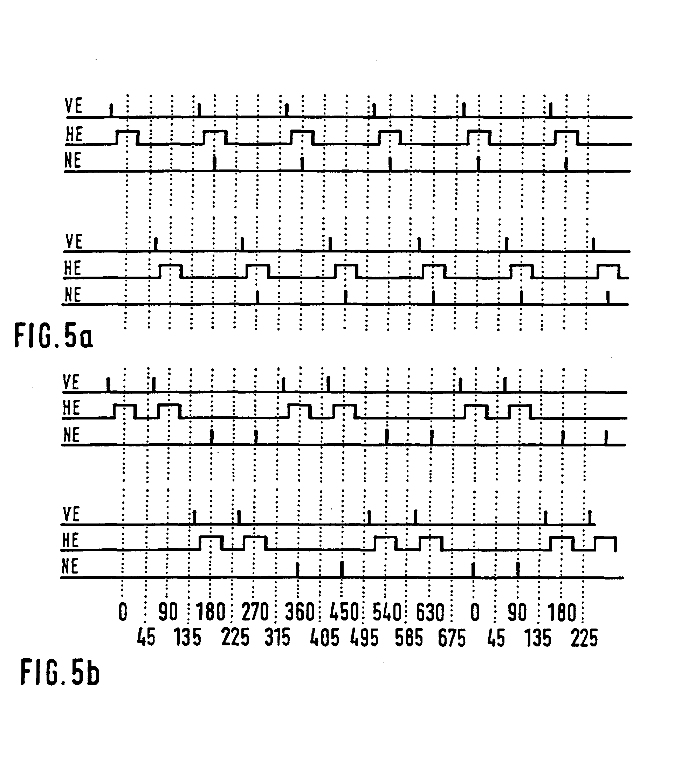

In Figur 5 sind die Verhältnisse bei einer Brennkraftmaschine mit acht Zylindern dargestellt. Die Zumessungen erfolgen im Abstand von ca. 90 Grad Kurbelwelle. In Figur 5a ist dargestellt, daß die ungeradzahligen das heißt der erste, der dritte, der fünfte und der siebte Zylinder der ersten Bank und die geradzahligen, das heißt der zweite, der vierte, der sechste und der achte Zylinder der zweiten Bank zugeordnet sind.

Erfolgt hier die Nacheinspritzung ebenfalls ca. 180 Grad nach dem oberen Totpunkt des jeweiligen Zylinders, so liegt die Nacheinspritzung beim darauffolgenden Zylinder der gleichen Bank. Eine Nacheinspritzung ist bei einer solchen Anordnung entsprechend wie bei einer Brennkraftmaschine mit vier Zylindern und einer Bank nur in einem eingeschränkten Bereich möglich.

In Figur 5b ist die erfindungsgemäße Ausgestaltung dargestellt, bei denen der erste und zweite, der fünfte und sechste der ersten Bank und der dritte und vierte sowie der siebte und achte der zweiten Bank zugeordnet sind. Jeweils zwei Zylinder, die in der Zündreihenfolge nacheinander folgen, sind einer Bank zugeordnet.

Jeweils der erste einer Gruppe von zwei Zylindern kann die Nacheinspritzung in einem Intervall zwischen 160 und 290 Grad nach dem oberen Totpunkt des ersten Zylinders erfolgen. Entsprechend kann dem jeweils zweiten Zylinder die Einspritzung zwischen 100 und 200 Grad Kurbelwelle nach dem oberen Totpunkt des jeweiligen Zylinders erfolgen.

Die Nacheinspritzungen der jeweiligen Zylinder erfolgt in dem Kurbelwellenabschnitt, in dem die Einspritzung in die jeweiligen Zylinder der zweiten Bank erfolgt.

## Patentansprüche

1. Verfahren zur Steuerung einer Brennkraftmaschine (100), bei dem erste Mittel (120, 121, 122 u. 123) der Brennkraftmaschine (100) Kraftstoff zumessen, der in der Brennkraftmaschine (100) verbrannt wird, wobei zweite Mittel (115) eine Abgasnachbehandlung durchführen, daß eine Nacheinspritzung erfolgt, bei der die ersten Mittel (120, 121, 122 u. 123) nach der Verbrennung Kraftstoff zumessen, der in den Mitteln (115) zur Abgasnachbehandlung reagiert, **dadurch gekennzeichnet, daß** die Zylinder wenigstens zwei Bänken derart zugeordnet werden, **daß** in der Zündreihenfolge aufeinanderfolgende Zylinder unterschiedlichen Bänken zugeordnet werden.

2. Verfahren zur Steuerung einer Brennkraftmaschine (100), bei dem erste Mittel (120, 121, 122 u. 123) der Brennkraftmaschine (100) Kraftstoff zumessen, der in der Brennkraftmaschine (100) verbrannt wird, wobei zweite Mittel (115) eine Abgasnachbehandlung durchführen, **daß** eine Nacheinspritzung erfolgt, bei der die ersten Mittel (120, 121, 122 u. 123) nach der Verbrennung Kraftstoff zumessen, der in den Mitteln (115) zur Abgasnachbehandlung reagiert, **dadurch gekennzeichnet, daß** die Zylinder wenigstens zwei Bänken derart zugeordnet werden, das zwei oder drei in der Zündreihenfolge aufeinanderfolgende Zylinder der gleichen Bank und die zwei oder drei folgenden Zylinder der anderen Bank zugeordnet werden.

3. Verfahren nach Anspruch 1 oder 2, **dadurch gekennzeichnet, daß** die Nacheinspritzung im Bereich zwischen 100° und 270° nach dem oberen Totpunkt des entsprechendes Zylinders, insbesondere im Bereich von 120° bis 150° nach dem oberen Totpunkt, erfolgt.

4. Verfahren nach einem der vorherigen Ansprüche, **dadurch gekennzeichnet, daß** bei einer Brennkraftmaschine mit vier Zylindern die Nacheinspritzung in einen Winkelbereich zwischen 200 und 240 nach dem oberen Totpunkt des entsprechenden Zylinders erfolgt.

5. Verfahren nach einem der vorherigen Ansprüche, **dadurch gekennzeichnet, daß** nur bei jeder n-ten Zumessung eine Nacheinspritzung erfolgt.

6. Vorrichtung zur Steuerung einer Brennkraftmaschine, mit ersten Mitteln (120, 121, 122 u. 123), die der Brennkraftmaschine (100) Kraftstoff zumessen, der in der Brennkraftmaschine (100) verbrannt wird, mit zweiten Mitteln (115), die eine Abgasnachbehandlung durchführen, wobei eine Nacheinspritzung erfolgt, bei der die ersten Mittel (120, 121, 122 u. 123) nach der Verbrennung Kraftstoff zumessen, der in den Mitteln (115) zur Abgasnachbehandlung reagiert, **dadurch gekennzeichnet, daß** die Zylinder wenigstens zwei Bänken derart zugeordnet sind, **daß** in der Zündreihenfolge aufeinanderfolgende Zylinder unterschiedlichen Bänken zugeordnet sind.

7. Vorrichtung zur Steuerung einer Brennkraftmaschine (100), mit ersten Mitteln, die der Brennkraftmaschine (100) Kraftstoff zumessen, der in der Brennkraftmaschine (100) verbrannt wird, mit zweiten Mitteln (115), die eine Abgasnachbehandlung durchführen, wobei eine Nacheinspritzung erfolgt, bei der die ersten Mittel (120, 121, 122 u. 123) nach der Verbrennung Kraftstoff zumessen, der in den Mitteln (115) zur Abgasnachbehandlung reagiert, **dadurch gekennzeichnet, daß** die Zylinder wenigstens zwei Bänken derart zugeordnet werden, das zwei oder drei in der Zündreihenfolge aufeinanderfolgende Zylinder der gleichen Bank und die zwei oder drei folgenden Zylinder der anderen Bank zugeordnet werden.

8. Vorrichtung nach Anspruch 6 oder 7, **dadurch gekennzeichnet, daß** es sich bei ersten Mittel um ein Common-Rail-System handelt.

## Claims

1. Method for controlling an internal combustion engine (100), in which first means (120, 121, 122 and 123) meter fuel to the internal combustion engine (100), which is burnt in the internal combustion engine (100), second means (115) performing exhaust-gas aftertreatment, that postinjection is performed, during which the first means (120, 121, 122 and 123) meter in fuel after combustion, this fuel reacting in the means (115) for exhaust-gas aftertreatment, **characterized in that** the cylinders are assigned to at least two banks in such a way that cylinders that follow one another in the ignition sequence are assigned to different banks.

2. Method for controlling an internal combustion engine (100), in which first means (120, 121, 122 and 123) meter fuel to the internal combustion engine (100), which is burnt in the internal combustion engine (100), second means (115) performing exhaust-gas aftertreatment, that postinjection is performed, during which the first means (120, 121, 122 and 123) meter in fuel after combustion, this fuel reacting in the means (115) for exhaust-gas aftertreatment, **characterized in that** the cylinders are assigned to at least two banks in such a way that two or three cylinders that follow one another in the ignition sequence are assigned to the same bank and the two or three following cylinders are assigned to the other bank.

3. Method according to Claim 1 or 2, **characterized in that** the postinjection takes place in the range of between 100° and 270° after top dead centre in the corresponding cylinder, in particular in the range of from 120° to 150° after top dead centre.

4. Method according to one of the preceding claims, **characterized in that**, in the case of an internal combustion engine with four cylinders, postinjection takes place in an angular range of between 200 and 240 after top dead centre in the corresponding cylinder.

5. Method according to one of the preceding claims, **characterized in that** postinjection takes place only every n^{th} metering operation.

6. Apparatus for controlling an internal combustion engine, with first means (120, 121, 122 and 123), which meter fuel to the internal combustion engine (100), which is burnt in the internal combustion engine (100), with second means (115), which perform exhaust-gas aftertreatment, postinjection being performed, during which the first means (120, 121, 122 and 123) meter in fuel after combustion, this fuel reacting in the means (115) for exhaust-gas aftertreatment, **characterized in that** the cylinders are assigned to at least two banks in such a way that cylinders that follow one another in the ignition sequence are assigned to different banks.

7. Apparatus for controlling an internal combustion engine (100), with first means, which meter fuel to the internal combustion engine (100), which is burnt in the internal combustion engine (100), with second means (115), which perform exhaust-gas aftertreatment, postinjection being performed, during which the first means (120, 121, 122 and 123) meter in fuel after combustion, this fuel reacting in the means (115) for exhaust-gas aftertreatment, **characterized in that** the cylinders are assigned to at least two banks in such a way that two or three cylinders that follow one another in the ignition sequence are assigned to the same bank and the two or three following cylinders are assigned to the other bank.

8. Apparatus according to Claim 6 or 7, **characterized in that** the first means are a common-rail system.

## Revendications

1. Procédé de commande d'un moteur à combustion interne (100) comprenant des premiers moyens (120, 121, 122, 123) pour doser le carburant dans le moteur thermique (100), qui le brûle, des seconds moyens (115) assurant le traitement des gaz d'échappement, avec une post-injection,
les premiers moyens (120, 121, 122, 123) dosant du carburant après la combustion, et ce carburant réagit dans les moyens (115) de traitement des gaz d'échappement,
**caractérisé en ce que**
les cylindres sont répartis entre au moins deux bancs de façon que des cylindres successifs dans l'ordre d'allumage appartiennent à des bancs différents.

2. Procédé de commande d'un moteur thermique (100) comportant des premiers moyens (120, 121, 122, 123) dosant le carburant brûlé dans le moteur thermique (100), selon lequel
des seconds moyens (115) assurent le traitement des gaz d'échappement et une post-injection est effectuée par les premiers moyens (120, 121, 122, 123) après la combustion du carburant, pour réagir dans les moyens (115) de traitement des gaz d'échappement,
**caractérisé en ce que**
les cylindres sont répartis entre au moins deux bancs de façon que deux ou trois cylindres successifs dans l'ordre d'allumage appartiennent au premier banc et que les deux ou trois cylindres suivants soient associés à l'autre banc.

3. Procédé selon l'une quelconque des revendications 1 ou 2,
**caractérisé en ce que**
la post-injection se fait dans une plage comprise entre 100° et 270° après le point mort haut du cylindre correspondant, notamment dans une plage comprise entre 120° et 150° après le point mort haut.

4. Procédé selon l'une quelconque des revendications précédentes,
**caractérisé en ce que**
pour un moteur à combustion interne à quatre cylindres, la post-injection se fait dans une plage angulaire comprise entre 200 et 240° après le point mort haut du cylindre correspondant.

5. Procédé selon l'une des revendications précédentes,
**caractérisé en ce qu'**
on n'effectue une post-injection que pour chaque n^{ième} dosage.

6. Dispositif de commande d'un moteur thermique comprenant des premiers moyens (120, 121, 122, 123) qui dosent le carburant brûlé dans le moteur thermique (100), des second moyens (115) pour traiter les gaz d'échappement, une post-injection étant prévue par les premiers moyens (120, 121, 122, 123) qui dosent du carburant après la combustion pour réagir avec les moyens (115) de traitement des gaz d'échappement,
**caractérisé en ce que**
les cylindres sont répartis en au moins deux bancs de façon que les cylindres successifs dans l'ordre d'allumage soient associés à des bancs différents.

7. Dispositif de commande d'un moteur thermique (100) comprenant des premiers moyens dosant le carburant brûlé dans le moteur thermique (100), des seconds moyens (115) assurant le traitement des gaz d'échappement, une post-injection étant réalisée par les premiers moyens (120, 121, 122, 123) qui dosent du carburant après la combustion du carburant pour réagir dans les moyens (115) de traitement des gaz d'échappement,
**caractérisé en ce que**
les cylindres sont répartis entre au moins deux bancs de façon que deux ou trois cylindres successifs dans l'ordre d'allumage appartiennent au même banc et que les deux ou trois cylindres suivants appartiennent à l'autre banc.

8. Dispositif selon les revendications 6 ou 7,
**caractérisé en ce que**
les premiers moyens sont un système d'injection à rampe commune.
